(19) Europäisches Patentamt
European Patent Office
Office européen des brevets

(11) Publication number: **0 024 926**
**B1**

(12) **EUROPEAN PATENT SPECIFICATION**

(45) Date of publication of patent specification: **03.12.86**

(51) Int. Cl.$^4$: **C 07 F 7/08,** C 07 F 7/18

(21) Application number: **80302986.7**

(22) Date of filing: **28.08.80**

(54) **Method for preparing organosilanes.**

(30) Priority: **31.08.79 US 71588**

(43) Date of publication of application:
**11.03.81 Bulletin 81/10**

(45) Publication of the grant of the patent:
**03.12.86 Bulletin 86/49**

(84) Designated Contracting States:
**AT BE CH DE FR GB IT LI NL SE**

(56) References cited:
**BE-A- 875 801**

(73) Proprietor: **M & T CHEMICALS, INC.**
**One Woodbridge Center**
**Woodbridge, New Jersey 07095 (US)**

(72) Inventor: **Berger, Abe**
**11 Malvern Drive**
**Summit New Jersey 07901 (US)**

(74) Representative: **Ellis, John Clifford Holgate et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a method for preparing organosilanes. This invention further relates to a method for preparing silanes containing an aryl or pyridyl group that is bonded to silicon through oxygen or sulphur and a lower alkylene group. The aryl or pyridyl group contains reactive substituents which enhance the utility of the organosilanes as coupling agents for bonding glass fibres to resin substrates and for numerous other end-use applications. Organosilanes of the aforementioned type are conventionally prepared by reacting an alkali metal- or alkaline earth metal salt of a phenol or thiophenol with a chloroalkylsilane that contains 2 or 3 alkoxy groups bonded to the silicon atom. Heretofore it has not been feasible to prepare these silanes in pure form and high yield due to the lack of anhydrous liquid reaction media that are solvents for both of the reactants. Liquid hydrocarbons such as toluene and xylene would be useful reaction media because these hydrocarbons form an azeotropic mixture with the water formed as a by-product during preparation of the phenoxide or thiophenoxide that is one of the starting materials for preparing the aforementioned silanes; however, the phenoxides are insoluble in liquid hydrocarbons. BE—A—875801 describes a method of making certain organosilanes of the aforementioned type in a liquid reaction medium consisting of a liquid hydrocarbon having a boiling point of 40° to 200°C and a dipolar aprotic liquid.

It has now been found that a reaction between the insoluble phenoxide and the silane will occur in anhydrous liquid hydrocarbon reaction media in the presence of a phase transfer catalyst selected from onium salts of elements in Group VA of the Mendeléeff's Periodic Table and cyclic polyethers or "crown ethers". The present method produces material of improved colour in higher yields and is less sensitive to elevated temperatures than known methods employing a dipolar, aprotic solvent such as dimethyl sulphoxide to solubilize the aforementioned alkali metal salt or alkaline earth metal phenoxide or thiophenoxide.

According to the invention there is provided a method for preparing an organosilane having the general formula

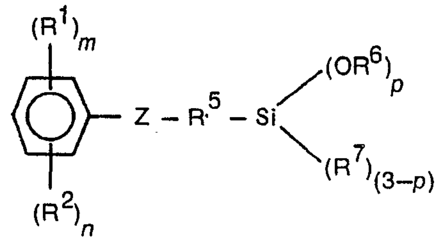

(I)

or the general formula

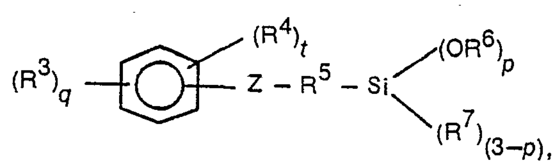

(II)

wherein $R^1$ for formula (I) is $—NH_2$, $—NR^8H$, $—N(R^8)_2$,

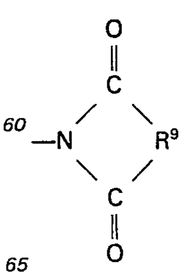 , —CHO, —CN, $—COR^8$, $—COOR^8$, Cl, Br, I, 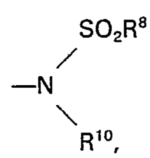 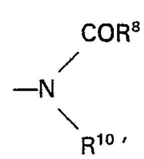 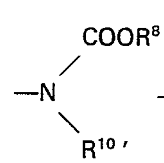 $—SO_2R^8$,

—$SOR^8$ or $NO_2$ and when more than one $R^1$ group is present the $R^1$ groups are the same or different;

$R^2$ for formula (I) is alkyl, alkoxy or thioalkoxy and contains from 1 to 12 carbon atoms and when more than one $R^2$ group is present the $R^2$ groups are the same or different;

$R^3$ for formula (II) is Cl, Br, I, —$COOR^8$, —CN, —$NH_2$, —$NR^8H$, —$N(R^8)_2$,

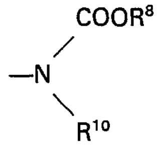 or 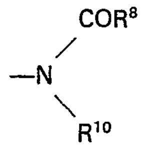

and when more than one $R^3$ group is present the $R^3$ groups are the same or different;

$R^4$ for formula (II) is alkyl containing from 1 to 12 carbon atoms;

$R^5$ for formulae (I) and (II) is methylene or alkylene containing from 3 to 12 carbon atoms;

$R^6$ and $R^7$ for formulae (I) and (II) are chosen from alkyl, cyanoalkyl, alkenyl, cycloalkyl, aryl, alkaryl and aralkyl wherein any alkyl group present as all or part of $R^6$ and/or $R^7$ contains from 1 to 12 carbon atoms;

$R^8$ for formulae (I) and (II) is chosen from alkyl, cycloalkyl, aryl, alkaryl and aralkyl wherein any alkyl group present contains from 1 to 12 carbon atoms;

$R^9$ for formula (I) is

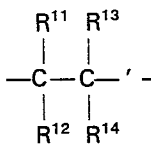 ' —CH = CH—, 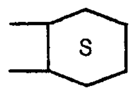 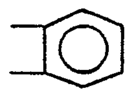 ,

wherein $R^{11}$ and $R^{13}$ are chosen from hydrogen, chlorine, bromine, iodine and alkyl containing from 1 to 12 carbon atoms, and $R^{12}$ and $R^{14}$ are chosen from hydrogen and alkyl containing 1 to 12 carbon atoms;

$R^{10}$ for formulae (I) and (II) is chosen from hydrogen, alkyl, cycloalkyl, aryl, alkaryl and aralkyl wherein any alkyl group present contains from 1 to 12 carbon atoms;

Z for formulae (I) and (II) is —O—, —S—,

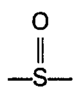 or 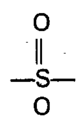 ;

*m* for formula (I) is 1, 2, 3, 4 or 5;

*n* for formula (I) is 0, 1 or 2;

*p* for formulae (I) and (II) is 1, 2 or 3;

*q* for formula (II) is 1, 2 or 3;

*t* for formula (II) is 0 or 1, and wherein the following provisos (a)-(e) obtain:

(a) when *m* is 2 one or both of $R^1$ is/are:

—$NH_2$, —$NR^8H$, —$N(R^8)_2$, 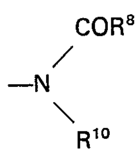 , 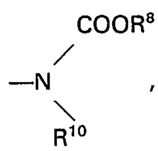 , 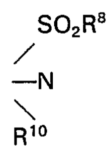 , —$COOR^8$ or 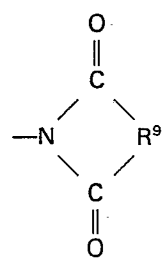

and any other $R^1$ is —CN, Cl, Br, I or —$NO_2$;

(b) when *m* is 3 one of $R^1$ is —$NH_2$, —$NR^8H$, —$N(R^8)_2$, Cl, Br or

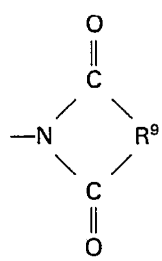

and the other two $R^1$ groups are chosen from Cl, Br and I;
(c) when *m* is 4 or 5, $R^1$ is chosen from chlorine, bromine and iodine;
(d) *n* is 1 or 2 when *m* is 1 and $R^1$ is $—NH_2$ or $—NO_2$, and
(c) the sum of *m* and *n* is not more than 5, the method comprising:

(i) reacting substantially equimolar amounts of an anhydrous alkali metal — or alkaline earth metal compound having the general formula

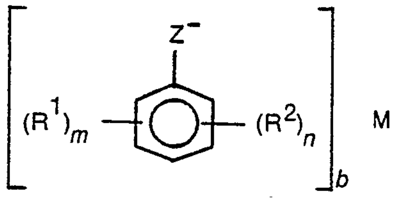

(III)

or the general formula

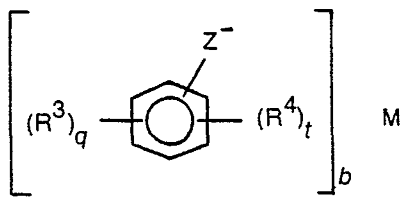

(IV)

wherein M is an alkali metal or alkaline earth metal, *b* is the valency of M and $R^1$, $R^2$, $R^3$, $R^4$, Z, *m, n, q* and *t* are as defined above, with a haloalkylsilane having the general formula

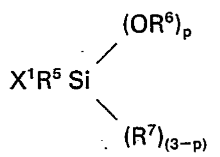

(V), wherein

$R^5$, $R^6$, $R^7$ and *p* are as defined above and $X^1$ is Cl, Br or I, the reaction being conducted under substantially anhydrous conditions at a temperature of from ambient to 200°C in a liquid reaction medium comprising at least one liquid hydrocarbon boiling at a temperature of 40 to 200°C and in the presence of a phase transfer catalyst chosen from onium salts of elements in Group V A of Mendeléeff's Periodic Table and "crown" ethers or cyclic polyethers, the said onium salts having the general formula

$$[\,(R^{15})_4E^{\oplus}\,]_r X^{2\,\ominus} \qquad \text{(VI) wherein}$$

E is N, P, As, Sb or Bi, $R^{15}$ is an alkyl group containing 1 to 18 carbon atoms or a phenyl group and the $R^{15}$ groups are the same or different, $X^2$ is F, Cl, Br, I, sulphate, phosphate, carbonate, alkylsulphonate or fluoroborate and *r* is the valency of $X^2$;

(ii) maintaining the resultant reaction medium at a temperature of from 40 to 200°C for a period sufficient to substantially completely convert compounds (III) and (V) to compound (I) or compounds (IV) and (V) to compound (II) respectively, and

(iii) isolating the compound (I) or compound (II) by evaporating the liquid reaction medium from the liquid phase of the reaction mixture. Preferably the "crown" ethers or cyclic polyethers contain 8 to 22 carbon atoms. Preferably $R^6$ or $R^6$ and $R^7$ is/are alkyl containing 1 to 4 carbon atoms, particularly methyl. Each $R^{15}$ may suitably be butyl or phenyl. The reaction is desirably conducted under an inert atmosphere. $R^1$ may be $—COOCH_3$ with $m=2$ and $n=0$. In formulae (III) and (IV) M may suitably be sodium or potassium.

The novelty of the present method resides in the use of a phase transfer catalyst to promote the reaction between the substantially anhydrous form of a compound (III) or compound (IV) as hereinbefore defined with a haloalkylsilane (V) as hereinbefore defined in the presence of a liquid hydrocarbon as the reaction medium. It has been demonstrated that virtually none of the desired product, or a low yield for thiophenol or mercaptopyridine salts, is obtained when the reaction is carried out using a liquid hydrocarbon diluent in the absence of the phase transfer catalyst. This absence of reactivity can be ascribed to the insolubility of the aforementioned alkali metal- or alkaline earth metal salt in a liquid hydrocarbon such as toluene.

The types of phase transfer catalysts that can be employed in the present method include quaternary onium salts of elements in Group VA of Mendeléeff's Periodic Table wherein the four hydrocarbon groups bonded to the element are alkyl or phenyl and contain from 1 to 18 carbon atoms. The four hydrocarbon groups can be identical or different.

The preferred elements are nitrogen and phosphorus. A third type of suitable phase transfer catalysts is the "crown" ethers. These compounds are cyclic polyethers that usually contain 18 atoms in the ring and, optionally, two substituents such as cyclohexyl or phenyl groups.

The various classes of phase transfer catalysts are discussed in a text entitled "Phase Transfer Catalysts In Organic Synthesis" by W. P. Weber and G. W. Gokel, published by Springer-Verlay.

The reaction of the process of the invention may be highly exothermic and is preferably conducted under an inert atmosphere and in the absence of even trace amounts of water, since water is known to react readily with silanes containing 2 or alkoxy or aryloxy groups bonded to silicon to yield polymeric products. The reaction medium comprises a liquid hydrocarbon, e.g. benzene or toluene, that contains a catalytically effective amount of one of the aforementioned phase transfer catalysts. The catalyst is usually present at a concentration of from 0.1 to 25%, based on the weight of silane.

The purpose of the liquid hydrocarbon is to facilitate the removal by azeotropic distillation of any water present in the initial reaction mixture. Water is a by-product of the reaction between an alkali metal- or alkaline earth metal hydroxide and the corresponding organic compound to prepare the salt (compound (III) or compound (IV)) that is reacted with the haloalkyl silane (compound V)) in accordance with the present method. Virtually all of this water must be removed prior to addition of the silane. Preferably, the haloalkylsilane is gradually added to a substantially anhydrous reaction mixture containing the aforementioned alkali metal- or alkaline earth metal salt and the catalyst. When the addition is complete and any exothermic reaction has subsided, it is usually desirable to heat the reaction mixture at from 70 to about 150°C for several hours to ensure substantially complete conversion of the reactants to the desired compound (I) or compound (II). The present compounds, many of which are colourless, high-boiling, viscous oils, are soluble in the reaction medium and readily isolatable by removal of the aforementioned liquid hydrocarbon by distillation under reduced pressure. Some of the compounds may darken if exposed to light or air for extended periods of time.

As previously disclosed the present method is applicable to the preparation of any phenoxyalkylsilane, some of which are known compounds.

The tri (hydrocarbyloxy) haloalkylsilanes or alkyl or aryl di(hydrocarbyloxy) haloalkylsilanes employed as one of the reagents for preparing the present compounds are either commercially available or can readily be synthesized by reacting the corresponding haloalkyltrihalosilane or a silane of the general formula

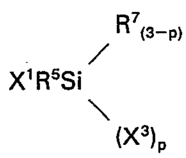

wherein $X^1$ and $X^3$ are chlorine, bromine or iodine, with an alcohol that contains from 1 to 12 carbon atoms. $R^7$ is as defined above. Alternatively, the hydroxyl group can be bonded to a carbocyclic or aromatic ring structure such as a cyclohexyl or phenyl group. The haloalkyltrihalosilane can be prepared by reacting a haloalkene such as allyl chloride or methallyl chloride with a trihalosilane at ambient temperature in the presence of a platinum catalyst. Procedures for preparing the intermediate silanes are well known in the art. A detailed discussion of reaction conditions is therefore not given in this specification.

Illustrative of the preferred functionally substituted phenols and thiophenols that can be employed in accordance with the present method are aminophenols, aminothiophenols and aminochlorophenols wherein the amino group is located in the ortho, meta or para position relative to the hydroxyl or —SH group, the isomeric hydroxybenzaldehydes and the isomeric esters of hydroxybenzoic and mercaptobenzoic acids wherein the alcohol residue of the ester contains from 1 to 12 carbon atoms. If the alcohol contains a phenyl group, the number of carbon atoms is usually from 7 to 18. Other functional substituents that can be present on the phenyl group are disclosed in the present specification. In addition the phenyl group may contain 1 or 2 alkyl, cycloalkyl or aryl groups.

Alternatively, the amino group of an aminophenol or aminothiophenol can be prereacted to form an amide, imide, carbamate, sulphonamide or other group prior to reaction of the phenol or thiophenol, in the form of its alkali metal or alkaline earth metal salt, with the haloalkylalkoxysilane.

An anhydrous form of the alkali metal or alkaline earth metal salt of the phenol, thiophenol, hydroxypyridine or mercaptopyridine can be prepared by employing the free metal or a hydride or alkoxide of the metal, such as sodium hydride or methoxide. Any of these compounds may be added to a solution of the desired phenol, thiophenol or pyridine derivative in a liquid hydrocarbon. The metal, metal hydride or metal alkoxide is conveniently employed as a dispersion or slurry in a liquid hydrocarbon. The temperature of the reaction medium is usually maintained between ambient and about 50°C to avoid an uncontrollable exothermic reaction.

The functionally substituted silanes prepared using the method of this invention are useful as coupling agents for bonding an organic polymer to an inorganic material such as glass fibres or metal, as flocculating agents for water purification, as sizings for glass fibres or fabrics and as an ingredient in automobile polishes and waxes.

These silanes can be reacted with liquid hydroxy- or alkoxy- terminated organopolysiloxanes together with optional fillers to form elastomeric products that are useful as coating materials, sealants and moulding compositions. Compounds wherein $R^1$ of the foregoing formula is amino or dialkylamino ((—$NH_2$ or —$N(R^4)_2$ wherein $R^4$ is as above)) impart detergent resistance to waxes and polishes.

The following Examples 1 and 2 disclose preferred embodiments of the present method. Example 3 is comparative. All parts and percentages are by weight unless otherwise specified.

Example 1

Preparation of 3(m-aminophenoxy)propyl Trimethoxysilane Using a "Crown" Ether

A glass reactor was charged with 60 g (0.55 mol) m-aminophenol, 43.28 g of a 50% aqueous solution of sodium hydroxide (0.54 mol NaOH) and 232 ml toluene. The resultant mixture was heated to the boiling point for six hours under a nitrogen atmosphere to remove all of the water present by azeotropic distillation. The reaction mixture was then allowed to cool to about 75°C, at which time 4 g of 18-crown-6 ether were added to the reactor followed by the dropwise addition of 109 g (0.55 mol) of 3-chloropropyl trimethoxysilane. The reaction mixture was stirred throughout the addition. The temperature of the reaction mixture increased spontaneously to 85°C during the addition. The temperature of the reaction mixture was maintained at from 75 to 85°C by heating and control of the addition rate. Upon completion of the addition, the reaction mixture was heated at 95°C for 16 hours, following which the mixture was allowed to cool and was filtered to remove the solid sodium chloride by-product. The toluene and other volatile materials were removed under a pressure of about 20 mbar (15 mm of mercury) at a temperature of about 60°C. The pressure was then reduced to 2.66 mbar (2 mm of mercury) and the material boiling from 175 to 180°C was recovered. This fraction, a pale yellow liquid, weighed 60 g, equivalent to a yield of 60%. Analysis by vapour phase chromatography confirmed the presence of the desired product, 3(m-aminophenoxy)propyl trimethoxysilane.

The foregoing procedure was repeated using 4 g of tetrabutylammonium iodide in place of the 18-crown 6- ether. A 62% yield of the desired silane was obtained.

Example 2

Preparation of 3(m-aminophenoxy)propyl Trimethoxysilane Using a Phosphonium Salt

A glass reactor was charged with a solution containing 31 g (0.75 mol) sodium hydroxide and 30 g water, followed by 300 g of xylene. A 81.75 g (0.75 mol) portion of m-aminophenol was then added with stirring and the resultant mixture was heated to the boiling point under a nitrogen atmosphere to remove substantially all of the water present in the reaction mixture. The reaction mixture was then allowed to cool to 130°C, at which time 1.5 g of tetrabutylphosphonium chloride were added to the reactor followed by the dropwise addition of 149 g (0.75 mol) of 3-chloropropyl trimethoxysilane. Upon completion of the addition the reaction mixture was heated at 135 to 136°C for 5 hours and 10 minutes, at which time a sample was removed and analyzed using vapour phase chromatography. The resultant chromatogram revealed the presence of solvent, product and no detectable amount of starting materials.

The reaction mixture was filtered to remove the sodium chloride by-product and the xylene together with any other relatively volatile materials were distilled by heating the filtrate to 190°C under a pressure of 66.5 mbar (50 mm of mercury). The residue, a dark coloured liquid, weighed 201 g, equivalent to a yield of 98.8%. The residue was analyzed using vapour phase chromatography and was found to contain 97% by weight of the desired silane.

Example 3

Attempted Preparation of 3(p-aminophenyl)propyl Trimethoxysilane In the Absence of a Phase Transfer Catalyst

A glass reactor was charged with 120 g (0.9 mol) p-aminophenol, 464 ml toluene and 86.6 g of a 50% by weight aqueous solution of sodium hydroxide. The resultant mixture was heated at the boiling point to remove the water present in the reaction mixture by azeotropic distillation. The temperature of the reaction mixture was then reduced to 81°C and 178.2 g (0.9 mol) of 3-chloropropyl trimethoxysilane were added dropwise over a period of one hour. The reaction mixture was then heated at 81°C for 16 hours with stirring, during which time a solid accumulated on the inner wall of the reactor. The toluene and other volatile materials were removed by heating the reaction mixture under the reduced pressure produced by a water aspirator. The residue, a clear yellow liquid, exhibited an infrared spectrum which did not contain the absorption maximum characteristic of the amino group. The boiling point of this product (45°C under a pressure of 2,66 mbar (2 mm of mercury) demonstrated that it was, in fact, unreacted 3-chloropropyl trimethoxysilane.

**Claims**

1. A method for preparing an organosilane having the general formula

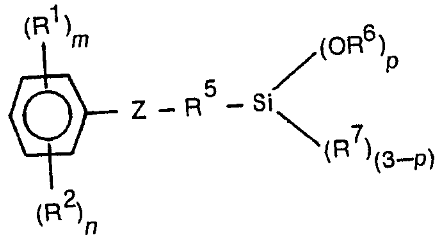 (I)

or the general formula

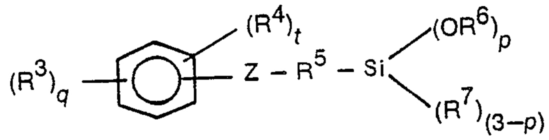 (II)

wherein $R^1$ for formula (I) is $—NH_2$, $—NR^8H$, $—N(R^8)_2$,

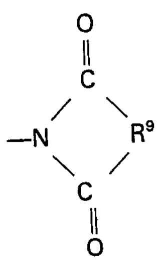 , $—CHO$, $—CN$, $—COR^8$, $—COOR^8$, Cl, Br, I, 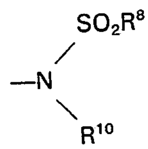 , 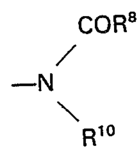 , 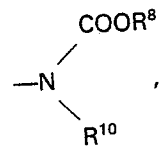 ,

$—SO_2R^8$, $—SOR^8$ or $NO_2$ and when more than one $R^1$ group is present the $R^1$ groups are the same or different;

$R^2$ for formula (I) is alkyl, alkoxy or thioalkoxy and contains from 1 to 12 carbon atoms and when more than one $R^2$ group is present the $R^2$ groups are the same or different;

$R^3$ for formula (II) is Cl, Br, I, $—COOR^8$, $—CN$, $—NH_2$, $—NR^8H$, $—N(R^8)_2$,

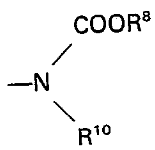 or 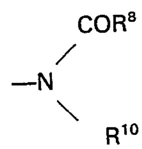

and when more than one $R^3$ group is present the $R^3$ groups are the same or different;

$R^4$ for formula (II) is alkyl containing from 1 to 12 carbon atoms;

$R^5$ for formulae (I) and (II) is methylene or alkylene containing from 3 to 12 carbon atoms;

$R^6$ and $R^7$ for formulae (I) and (II) are chosen from alkyl, cyanoalkyl, alkenyl, cycloalkyl, aryl, alkaryl and aralkyl wherein any alkyl group present as all or part of $R^6$ and/or $R^7$ contains from 1 to 12 carbon atoms;

$R^8$ for formulae (I) and (II) is chosen from alkyl, cycloalkyl, aryl, alkaryl and aralkyl wherein any alkyl group present contains from 1 to 12 carbon atoms;

$R^9$ for formula (I) is

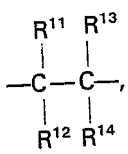, $—CH{=}CH—$, 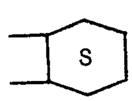 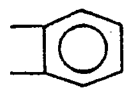 ,

wherein $R^{11}$ and $R^{13}$ are chosen from hydrogen, chlorine, bromine, iodine and alkyl containing from 1 to 12 carbon atoms, and $R^{12}$ and $R^{14}$ are chosen from hydrogen and alkyl containing 1 to 12 carbon atoms;

$R^{10}$ for formulae (I) and (II) is chosen from hydrogen, alkyl, cycloalkyl, aryl, alkaryl and aralkyl wherein any alkyl group present contains from 1 to 12 carbon atoms;

Z for formulae (I) and (II) is —O—, —S—,

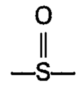 or 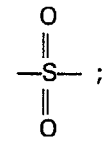 ;

*m* for formula (I) is 1, 2, 3, 4 or 5;
*n* for formula (I) is 0, 1 or 2;
*p* for formulae (I) and (II) is 1, 2 or 3;
*q* for formula (II) is 1, 2 or 3;
*t* for formula (II) is 0 or 1, and wherein the following provisos (a)-(e) obtain:
(a) when *m* is 2 one or both of $R^1$ is/are:

$-NH_2$, $-NR^8H$, $-N(R^8)_2$, 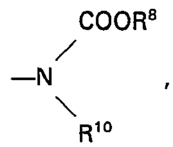, 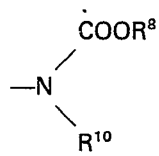, 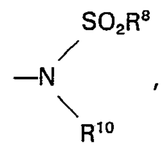, $-COOR^8$ or 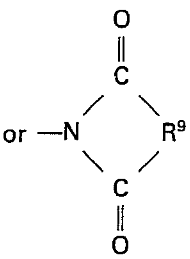

and any other $R^1$ is —CN, Cl, Br, I or $-NO_2$;
(b) when *m* is 3 one of $R^1$ is $-NH_2$, $-NR^8H$, $-N(R^8)_2$, Cl, Br or

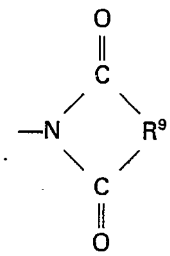

and the other two $R^1$ groups are chosen from Cl, Br and I;
(c) when *m* is 4 or 5, $R^1$ is chosen from chlorine, bromine and iodine;
(d) *n* is 1 or 2 when *m* is 1 and $R^1$ is $-NH_2$ or $-NO_2$, and
(e) the sum of *m* and *n* is not more than 5, the method comprising:

(i) reacting equimolar amounts of an anhydrous alkali metal — or alkaline earth metal compound having the general formula

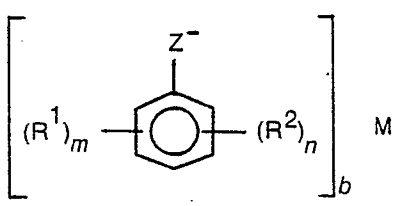

(III)

or the general formula

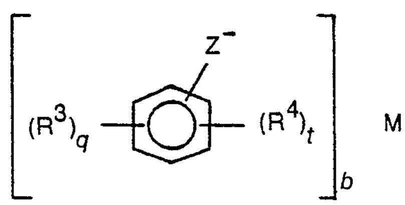

(IV)

wherein M is an alkali metal or alkaline earth metal, *b* is the valency of M and $R^1$, $R^2$, $R^3$, $R^4$, Z, *m, n, q*

and *t* are as defined above, with a haloalkylsilane having the general formula

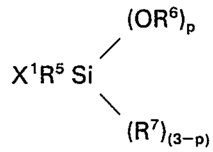

(V), wherein

$R^5$, $R^6$, $R^7$ and *p* are as defined above and $X^1$ is Cl, Br or I, the reaction being conducted under substantially anhydrous conditions at a temperature of from ambient to 200°C in a liquid reaction medium comprising at least one liquid hydrocarbon boiling at a temperature of 40 to 200°C;

(ii) maintaining the resultant reaction medium at a temperature of from 40 to 200°C for a period sufficient to substantially completely convert compounds (III) and (V) to compound (I) or compounds (IV) and (V) to compound (II) respectively, and

(iii) isolating the compound (I) or compound (II) by evaporating the liquid reaction medium from the liquid phase of the reaction mixture, characterised in that in stage (I) there is used a phase transfer catalyst chosen from onium salts of elements in Group V A of Mendeléeff's Periodic Table and "crown" ethers or cyclic polyethers, the said onium salts having the general formula

$$[(R^{15})_4E^{\oplus}]_r X^{2\,(r)\ominus} \quad \text{(VI) wherein}$$

E is N, P, As, Sb or Bi, $R^{15}$ is an alkyl group containing 1 to 18 carbon atoms or a phenyl group and the $R^{15}$ groups are the same or different, $X^2$ is F, Cl, Br, I, sulphate, phosphate, carbonate, alkylsulphonate or fluoroborate and *r* is the valency of $X^2$.

2. A method according to Claim 1, wherein the "crown" ethers or cyclic polyethers contain 8 to 22 carbon atoms.

3. A method according to Claim 1 or Claim 2, wherein $R^1$ is $—NH_2$, $—N(R^8)_2$ or —CHO.

4. A method according to Claim 1 or Claim 2, wherein $R^1$ is $—COOCH_3$, *m* is 2 and *n* is 0.

5. A method according to any preceding claim, wherein $R^5$ is propylene.

6. A method according to any preceding claim, wherein $R^6$ or $R^6$ and $R^7$ is/are alkyl containing 1 to 4 carbon atoms.

7. A method according to Claim 6, wherein $R^6$ or $R^6$ and $R^7$ is/are methyl.

8. A method according to any preceding claim, wherein $X^1$ is Cl.

9. A method according to any preceding claim, wherein M is sodium.

10. A method according to any preceding claim, wherein each $R^{15}$ is butyl or phenyl.

11. A method according to any preceding claim, wherein the reaction is conducted under an inert atmosphere.

12. A method according to any preceding claim, wherein the phase transfer catalyst is 18-crown-6 ether.

**Patentansprüche**

1. Ein Verfahren zur Herstellung eines Organosilans der allgemeinen Formel

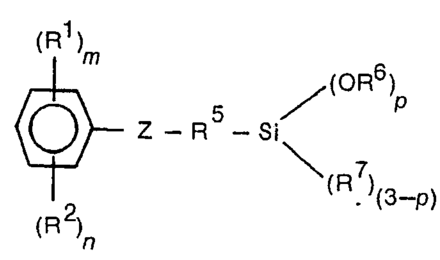

(I)

oder der allgemeinen Formel

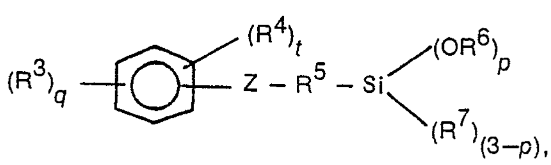

(II)

worin $R^1$ in der Formel (I)-$NH_2$,

—$NR^8H$, —$N(R^8)_2$, 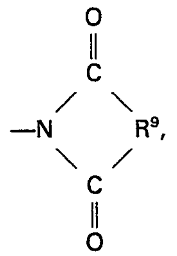 —CHO, —CN, —$COR^8$, —$COOR^8$, Cl, Br, I,

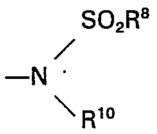 , 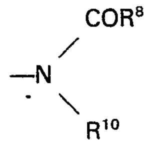 , 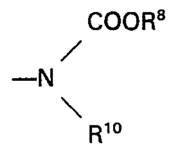 ,

—$SO_2R^8$, —$SOR^8$ oder $NO_2$ bedeutet und wenn mehr als eine Gruppe $R^1$ vorhanden ist, die Gruppen $R^1$ gleich oder verschieden sein können;

$R^2$ in der Formel (I) Alkyl, Alkoxy oder Thioalkoxy mit 1—12 C-Atomen bedeutet und wenn mehr als eine Gruppe $R^2$ vorhanden ist, die Gruppen $R^2$ gleich oder verschieden sein können;

$R^3$ in der Formel (II) Cl, Br, J, —$COOR^8$, —CN, —$NH_2$, —$N(R^8)_2$,

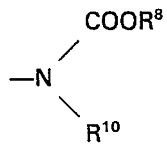 oder 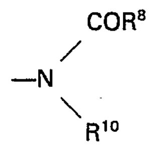

darstellt und wenn mehr als eine Gruppe $R^3$ vorhanden ist, die Gruppen $R^3$ gleich oder verschieden sein können;

$R^4$ in der Formel (II) Alkyl mit 1—12 C-Atomen bedeutet;

$R^5$ in den Formeln (I) und (II) für Methylen oder Alkylen mit 3—12 C-Atomen steht;

$R^6$ und $R^7$ in den Formeln (I) und (II) aus Alkyl, Cyanoalkyl, Alkenyl, Cycloalkyl, Aryl, Alkaryl, und Aralkyl gewählt werden, worin jede Alkylgruppe die als das gesamte oder als Anteil von $R^6$ und/oder $R^7$ vorhanden ist, 1—12 C-Atome enthält;

$R^8$ in den Formeln (I) und (II) aus Alkyl, Cycloalkyl, Aryl, Alkaryl und Aralkyl gewählt wird, worin jede vorhandene Alkylgruppe 1—12 C-Atome enthält;

$R^9$ in der Formel (I)

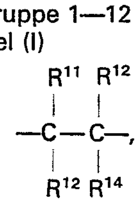 , —CH = CH—, 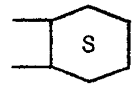 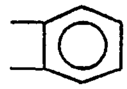 ,

worin $R^{11}$ und $R^{13}$ aus Wasserstoff, Chlor, Brom, Jod und Alkyl mit 1—12 C-Atomen gewählt werden und $R^{12}$ und $R^{14}$ aus Wasserstoff und Alkyl mit 1—12 C-Atomen gewählt werden;

$R^{10}$ in den Formeln (I) und (II) aus Wasserstoff, Alkyl, Cycloalkyl, Aryl, Alkaryl und Aralkyl gewählt wird, worin jede vorhandene Alkylgruppe 1—12 C-Atome enthält;

Z in den Formeln (I) und (II) —O—, —S—,

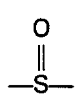 oder 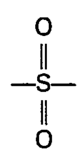

darstellt;

m in der Formel (I) 1, 2, 3, 4 oder 5 bedeutet;

n in der Formel (I) 0, 1 oder 2 darstellt;

p in den Formeln (I) und (II) für 1, 2 oder 3 steht;

q in der Formel (II) 1, 2 oder 3 ist;

t in der Formel (II) 0 oder 1 bedeutet, und worin folgende Maßgaben (a)-(e) zutreffen;

(a) wenn m für 2 steht, ist (sind) $R^1$ oder beide $R^1$

$-NH_2$, $-NR^8H$, $-N(R^8)_2$, 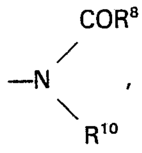 , 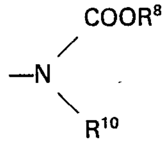 , 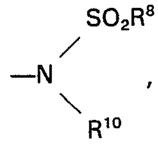 , $-COOR^8$ oder 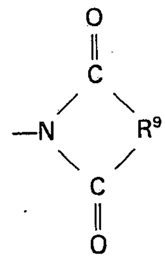

und bedeutet jedes andere $R^1$ $-CN$, Cl, Br, J oder $-NO_2$;
(b) wenn m 3 bedeutet, stellt ein $R^1$ $-NH_2$, $-NR^8H$, $-N(R^8)_2$, Cl, Br oder

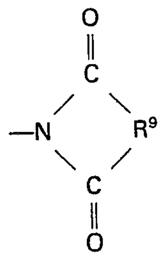

dar und werden die anderen beiden Gruppen $R^1$ aus Cl, Br und J gewählt;
(c) wenn m 4 oder 5 ist, wird $R^1$ aus Chlor, Brom und Jod gewählt;
(d) ist n 1 oder 2, wenn m 1 bedeutet und $R^1$ für $-NH_2$ oder $-NO_2$ steht und
(e) die Summe von m und n nicht mehr als 5 beträgt; das Verfahren umfassend
(i) Umsetzen äquimolarer Mengen einer wasserfreien Alkalimetall- oder Erdalkalimetallverbindung der allgemeinen Formel

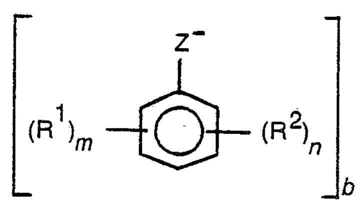 (III)

oder der allgemeinen Formel

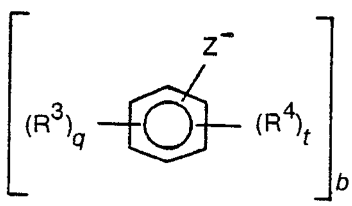 (IV)

worin M für ein Alkalimetall oder Erdalkalimetall steht, b die Wertigkeit von M ist und $R^1$, $R^2$, $R^3$, $R^4$, Z, m, n, q und t die vorstehend angeführte Bedeutung besitzen, mit einem Haloalkylsilan der allgemeinen Formel

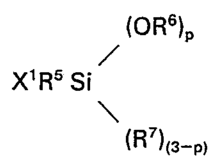 (V),

worin $R^5$, $R^6$, $R^7$ und p die oben angeführte Bedeutung aufweisen und $X^1$ für Cl, Br oder J steht, umgesetzt wird, wobei die Reaktion unter im wesentlichen wasserfreien Bedingungen bei einer Temperatur von Raumtemperatur bis 200°C in einem flüssigen Reaktionsmedium vorgenommen wird, das wenigstens einen flüssigen Kohlenwasserstoff mit einem Siedepunkt von 40—200°C enthält.
(ii) Halten des entstandenen Reaktionsgemisches auf einer Temperatur von 40—200°C während eines Zeitraums, der ausreicht, um im wesentlichen vollständig die Verbindungen (III) und (V) in die Verbindung (I) bzw. die Verbindungen (IV) und (V) in die Verbindung (II) umzuwandeln, und

(iii) Isolieren der Verbindung (I) oder (II) durch Abdampfen des flüssigen Reaktionsmediums aus der flüssigen Phase des Reaktionsgemisches,

dadurch gekennzeichnet, daß in Schritt (i) ein Phasenübertragungskatalysator eingesetzt wird, der aus den Oniumsalzen von Elementen der Gruppe VA des Periodischen Systems und "Kronen"-Äthern oder cyclischen Polyäthern gewählt wird, wobei die genannten Oniumsalze die allgemeine Formel

$$[\,(R^{15})_4E^{\oplus}\,]_rX^{2\,\ominus} \qquad \text{(VI)}$$

aufweisen, worin E für N, P, As, Sb oder Bi steht, $R^{15}$ eine Alkylgruppe mit 1—18 C-Atomen oder eine Phenylgruppe darstellt und die Gruppen $R^{15}$ gleich oder verschieden sind, $X^2$, F, Cl, Br, J, Sulfat, Phosphat, Carbonat, Alkylsulfonat oder Fluorborat bedeutet und r die Wertigkeit von $X^2$ ist.

2. Ein Verfahren nach Anspruch 1, worin die "Kronen"-Äther oder cyclischen Polyäther 8—22 C-Atome enthalten.

3. Ein Verfahren nach Anspruch 1 oder 2, worin $R^1$ —$NH_2$, —$N(R^8)_2$ oder —CHO ist.

4. Ein Verfahren nach Anspruch 1 oder 2, worin $R^1$ —$COOCH_3$, $m^2$ und n 0 bedeutet.

5. Ein Verfahren nach einem der vorhergehenden Ansprüche, worin $R^5$ Propylen ist.

6. Ein Verfahren nach einem der vorhergehenden Ansprüche, worin $R^6$ oder $R^6$ und $R^7$ für Alkyl mit 1—4 C-Atomen steht (stehen).

7. Ein Verfahren nach Anspruch 6, worin $R^6$ oder $R^6$ und $R^7$ Methyl ist (sind).

8. Ein Verfahren nach einem der vorhergehenden Ansprüche, worin $X^1$ Cl bedeutet.

9. Ein Verfahren nach einem der vorhergehenden Ansprüche, worin M Natrium darstellt.

10. Ein Verfahren nach einem der vorhergehenden Ansprüche, worin jedes $R^{15}$ für Butyl oder Phenyl steht.

11. Ein Verfahren nach einem der vorhergehenden Ansprüche, worin die Reaktion in einer inerten Atmosphäre durchgeführt wird.

12. Ein Verfahren nach einem der vorhergehenden Ansprüche, worin der Phasenübertragungskatalysator 18-Kronen-6-Äther ist.

13. Ein Verfahren nach einem der vorhergehenden Ansprüche, worin E Stickstoff oder Phosphor bedeutet.

**Revendications**

1. Procédé de préparation d'un organosilane ayant la formule générale

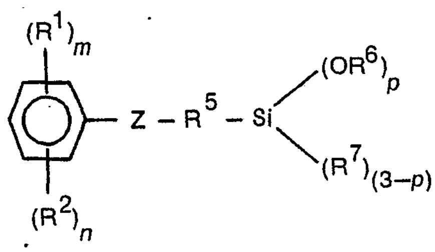

(I)

ou la formule générale

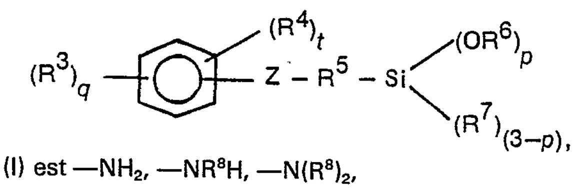

(II)

où $R^1$ pour la formule (I) est —$NH_2$, —$NR^8H$, —$N(R^8)_2$,

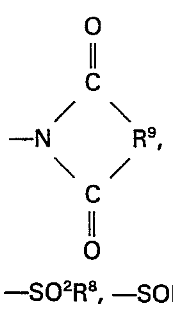

—CHO, —CN, —$COR^8$, —$COOR^8$, Cl, Br, I,

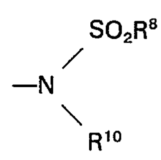

,

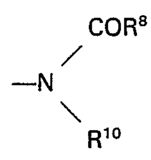

,

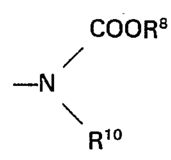

,

—$SO^2R^8$, —$SOR^8$ ou $NO_2$ et lorsque plus d'un groupe $R^1$ est présent, les groupes $R^1$ sont identiques ou différents;

$R_2$ pour la formule (I) est alcoyle, alcoxy ou thioalcoxy et contient de 1 à 12 atomes de carbone et lorsque plus d'un groupe $R^2$ est présent, les groupes $R^2$ sont identiques ou différents;

$R^3$ pour la formule (II) est Cl, Br, I, —$COOR^8$, —CN, —$NH_2$, —$NR^8H$, —$N(R^8)_2$,

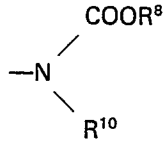 ou 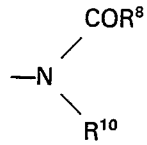

et quand plus d'un groupe $R^3$ est présent, les groupes $R^3$ sont identiques ou différents;

$R^4$ pour la formule (II) est alcoyle contenant de 1 à 12 atomes de carbone;

$R^5$ pour les formules (I) et (II) est méthylène ou alcoylène contenant de 3 à 12 atomes de carbone;

$R^6$ et $R^7$ pour les formules (I) et (II) sont choisis parmi alcoyle, cyanoalcoyle, alkényle, cycloalcoyle, aryle, alkaryle et aralcoyle où tout groupe alcoyle présent en tant que la totalité ou une partie de $R^6$ et/ou $R^7$ contient de 1 à 12 atomes de carbone;

$R^8$ pour les formules (I) et (II) est choisi parmi alcoyle, cycloalcoyle, aryle, alkaryle et aralcoyle où tout groupe alcoyle présent contient de 1 à 12 atomes de carbone;

$R^9$ pour la formule (I) est

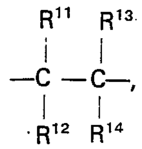, 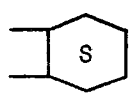 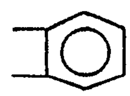 ,

où $R^{11}$ et $R^{13}$ sont choisis parmi l'hydrogène, le chlore, le brome, l'iode et un alcoyle contenant de 1 à 12 atomes de carbone, et $R^{12}$ et $R^{14}$ sont choisis parmi l'hydrogène et un alcoyle contenant de 1 à 12 atomes de carbone;

$R^{10}$ pour les formules (I) et (II) est choisi parmi l'hydrogène, un alcoyle, un cycloalcoyle, un aryle, un alkaryle et un aralcoyle où tout groupe alcoyle présent contient de 1 à 12 atomes de carbone;

Z pour les formules (I) et (II) est —O—, —S—

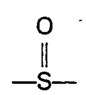 ou 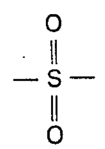

*m* pour la formule (I) est 1, 2, 3, 4 ou 5;
*n* pour la formule (I) est 0, 1 ou 2;
*p* pour les formules (I) et (II) est 1, 2 ou 3;
*q* pour la formule (II) est 1, 2 ou 3;
*t* pour la formule (II) est 0 ou 1, et où les conditions (a)-(e) suivantes donnent;
(a) quand *m* est 2, l'un ou les deux de $R^1$ est/sont:

—$NH_2$, —$NR^8H$, —$N(R^8)_2$, 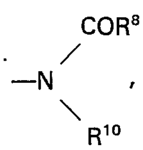 , 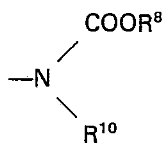 , 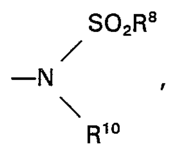 , —$COOR^8$ ou 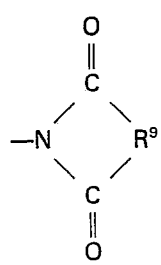

et tout autre $R^1$ est —CN, Cl, Br, I ou —$NO_2$;

(b) quand *m* est 3 l'un de $R^1$ est —$NH_2$, —$NR^8H$, —$N(R^8)_2$, Cl, Br ou

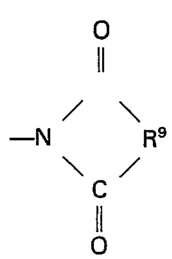

et les deux autres groupes $R^1$ sont choisis parmi Cl, Br et I;

(c) quand *m* est 4 ou 5, $R^1$ est choisi parmi le chlore, le brome et l'iode;

(d) *n* est 1 ou 2 quand *m* est 1 et $R^1$ est $-NH_2$ ou $-NO_2$, et

(e) la somme de *m* et *n* n'est pas supérieure à 5, le procédé comprenant:

(i) la réaction de quantités équimolaires d'un composé anhydre d'un métal alcalin ou d'un métal alcalino-terreux ayant la formule générale:

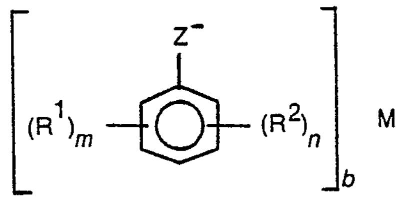 (III)

ou la formule générale

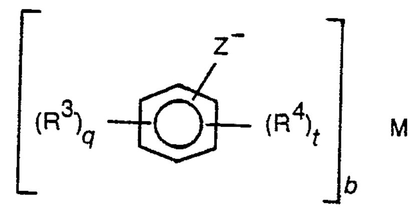 (IV)

où M est un métal alcalin ou un métal alcalino-terreux, *b* est la valence de M et $R^1$, $R^2$, $R^3$, $R^4$, Z, *m, n, q* et *t* sont tels que définis ci-dessus, avec un haloalkylsilane ayant la formule générale

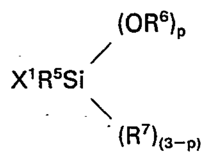 (V), où

$R^5$, $R^6$, $R^7$ et *p* sont tels que définis ci-dessus et $X^1$ Cl, Br, ou I, la réaction étant entreprise en conditions sensiblement anhydres à une température comprise entre la température ambiante et 200°C dans un milieu réactionnel liquide comprenant au moins un hydrocarbure liquide bouillant à une température de 40 à 200°C

(ii) le maintien du milieu réactionnel résultant à une température de 40 à 200°C pendant un temps suffisant pour convertir sensiblement complètement les composés (III) et (V) en composé (I) ou les composés (IV) et (V) en composé (II) respectivement, et

(iii) l'isolement du composé (I) ou du composé (II) par évaporation du milieu réactionnel liquide de la phase liquide du mélange réactionnel

caractérisé en ce qu'à l'étape (i), on utilise un catalyseur de transfert de phase choisi parmi les sels onium d'éléments du Groupe VA de la Table Périodique de Mendeléeff et des éthers "Couronne" ou polyéthers cycliques, lesdits sels onium ayant la formule générale

$$[(R^{15})_4E^{\oplus}]_rX^{2\,(r-)} \qquad \text{(VI)} \quad \text{où}$$

E est N, P, As, Sb ou Bi, $R^{15}$ est un groupe alcoyle contenant 1 à 18 atomes de carbone ou un groupe phényle et les groupes $R^{15}$ sont identiques ou différents, $X^2$ est F, Cl, Br, I, sulfate, phosphate, carbonate, alkylsulfonate ou fluoroborate et *r* est la valence de $X^2$.

2. Procédé selon la revendication 1, où les éthers "couronne" ou polyéthers cycliques contiennent 8 à 22 atomes de carbone.

3. Procédé selon la revendication 1 ou la revendication 2, où $R^1$ est $-NH_2$, $-N(R^8)_2$ ou $-CHO$.

4. Procédé selon la revendication 1 ou la revendication 2, où $R^1$ est $-COOCH_3$, *m* est 2 et *n* est 0.

5. Procédé selon toute revendication précédente, où $R^5$ est propylène.

6. Procédé selon toute revendication précédente, où $R^6$ ou $R^6$ et $R^7$ est/sont alcoyle contenant 1 à 4 atomes de carbone.

7. Procédé selon la revendication 6, où $R^6$ ou $R^6$ et $R^7$ est/sont méthyle.

8. Procédé selon toute revendication précédente, où $X^1$ est Cl.

9. Procédé selon toute revendication précédente, où M est sodium.

10. Procédé selon toute revendication précédente, où chaque $R^{15}$ est butyle ou phényle.

11. Procédé selon toute revendication précédente, où la réaction est entreprise sous une atmosphère inerte.

12. Procédé selon toute revendication précédente, où le catalyseur de transfert de phase est 18-couronne-6 éther.

13. Procédé selon toute revendication précédente, où E est azote ou phosphore.